(19) Europäisches Patentamt
European Patent Office
Office européen des brevets

(11) Publication number: **0 195 669**
**B1**

# (12) EUROPEAN PATENT SPECIFICATION

(45) Date of publication of patent specification: 11.07.90

(51) Int. Cl.$^5$: C 01 F 7/34

(21) Application number: 86302038.4

(22) Date of filing: 19.03.86

## (54) Process for preparing hydrated alumina.

(30) Priority: 19.03.85 IT 1995985

(43) Date of publication of application:
24.09.86 Bulletin 86/39

(45) Publication of the grant of the patent:
11.07.90 Bulletin 90/28

(84) Designated Contracting States:
BE CH DE FR GB IT LI NL SE

(56) References cited:
US-A-3 027 234
US-A-3 183 194

CHEMICAL ABSTRACTS, vol. 76, no. 4, 24th January 1972, page 26, column 2, abstract no. 15279r, Columbus, Ohio, US; VIRSKAYA et al.: "Effect of polyelectrolytes on the structural and mechanical properties of alumina and silica gels"; VZAIMODEISTVIE VODORASTVORIMYKH POLIELEKTROLITOV DISPERSNYMI SIST. 1970, 3-9

(73) Proprietor: Montedison S.p.A.
31, Foro Buonaparte
I-20121 Milan (IT)

(72) Inventor: Montino, Franco
15, via Callori
I-15033 Casale Monferrato Alessandria (IT)
Inventor: Spoto, Giuseppe
60, Corso Allamano
I-10136 Torino (IT)

(74) Representative: Whalley, Kevin et al
MARKS & CLERK 57/60 Lincoln's Inn Fields
London WC2A 3LS (GB)

(56) References cited:
CHEMICAL ABSTRACTS, vol. 85, no. 24, 13th December 1976, page 346, column 2, abstract no. 182727c, Columbus, Ohio, US; N.S. INOYATOV et al.: "Effect of surfactant polyelectrolytes on the adsorption properties of some xerogels"; TEZISY DOKL. SOOBSHCH. VSES. SIMP. FIZ.-KHIM. OSN. PRIMEN. NAPRAVLENNOGO SINT. POVERKHN.-AKT. VESHCHESTV 1974, 82-83

EP 0 195 669 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for preparing hydrated alumina, and in particular to a process for preparing hydrated alumina consisting essentially of spherical particles, by homogeneous precipitation.

Hydrated alumina is utilizable as a precursor for preparing various types of crystalline alumina consisting essentially of spherical particles which retain the same morphological and granulometric characteristics of the precursor. The preparation of alpha-alumina is described in particular in a preceding patent application.

In its various cyrstalline forms, alumina has a wide range of uses, for example as material for electronics, in the preparation of substrates for semiconductors and in the packing of integrated circuits, as a ceramic material for manufacturing cutting tools, or as a catalyst or catalyst support in heterogeneous catalysis.

From the technical and patent literature various methods are known for preparing hydrated alumina in the form of spherical, non-aggregated particles, whether monodispersed or polydispersed with a low polydispersion index.

In Journal Inorg. Nucl. Chem. 1973, vol. *35*, pages 3691—3705 (Roger Brace and Egon Matijevic) there is described a method for preparing hydrated, spherical monodispersed alumina, having sizes below one micron, starting from aluminium sulphate solutions through forced hydrolysis at temperatures higher than 90°C of the order of 100°C during a time ranging from a few hours to a few days.

According to this article, it is of substantial importance to operate with aluminium sulphate solutions having an $Al^{3+}$ concentration ranging from $2.10^{-4}$ to $5.10^{-3}$ moles/l in order to obtain products in the spherical and monodispersed form.

By operating with the concentrations indicated to be essential for obtaining alumina in the form of spherical and monodispersed particles, the precipitated hydrated alumina reaches a maximum value of 33% by weight after 4 days starting from $Al^{3+}$ solutions at concentrations of $1.10^{-3}$ moles/l.

By increasing the $Al^{3+}$ concentration of the starting solution — the forced hydrolysis time being the same — the percentage of precipitated hydrated alumina tends to decrease. If the hydrolysis is carried out at the same initial Al-salt concentration during longer times, a re-dissolution of the precipitated alumina takes place, with further lowering of the precipitation yield.

The method described hereinabove is of no practical usefulness from an industrial viewpoint, as the hydrated alumina productivity is very low, of the order of 1 mg/l hr.

It is also known that if the forced hydrolysis of aluminium sec.-butoxide is carried out in the presence of sulphate ions, it is possible to increase the reaction yield until the theoretical yield is reached; however, it is necessary to always operate at very low $Al^{3+}$ concentrations, generally of the order of $10^{-3}$ moles/l, which lead to a productivity of the order of 50 mg/l. hour.

Processes of the type cited hereinbefore are described for example in "Aluminium Hydrous Oxide Sols. II. Preparation of Uniform Spherical Particles by Hydrolysis of Al-sec.-Butoxide" P. L. Catone and E. Matijevic, Journal of Colloid Interface Science, Vol. 48, No. 2, August 1974, page 291. By this process it is possible to obtain quantiative yields, but always with very low productivities, which require very complicated processes and utilize aluminium compounds having much higher costs than those of aluminium sulphate.

There are also known other processes for preparing hydrated alumina obtained starting from aluminium salts, such as sulphate, at concentrations of about 0.6 moles/l in the presence of a 10% ammonia aqueous solution.

Processes like this one are indicated in South African Patent No. 555,052. However, the alumina obtained by this process is not in the form of monodispersed particles, but of polydispersed particles and, above all, aggregates are present because the precipitation does not occur homogeneously.

Other processes are known in which alumina is prepared starting from alumina sulphate, in the presence of substances capable of releasing $OH^-$ ions under the action of heat, so as to allow homogeneous precipitation in shorter times.

The term "homogenous precipitation" means that any local oversaturation phenomenon caused by a rapid contact of the aluminium salt solution with the alkaline solution does not occur.

Also with this method, however, the alumina, although obtained by quantitative reaction, is not in the form of spherical particles and, mostly, it appears in the form of agglomerates if the method is operated with starting $Al^{3+}$ concentrations higher than $5.10^{-3}$ moles/l.

There are known further methods for preparing alumina starting from aluminium nitrate or aluminium sulphate in the presence of succinic acid, of $NH_4Cl$ and urea, which provide a homogeneous precipitation. In neither of these cases, however, it is possible to obtain alumina in the form of spherical particles with a low polydispersion index, as aggregates are always present.

With a view to obtaining hydrated alumina with a controlled morphology and free from aggregates, with high and industrially interesting yields, processes like those described hereinabove, which involve precipitation from solutions, are not utilized, but different techniques are used.

Preparation methods of this type are described, for example in published European Patent Application No. EP—A—117,755, according to which techniques are utilized that involve the preparation of an aerosol of liquid particles of a hydrolizable aluminium compound, which is successively reacted with water vapor

to obtain the hydrated alumina in the form of solid particles.

It has now surprisingly been found that it is possible to prepare hydrated alumina consisting essentially of spherical, non-aggregated particles, whether monodispersed or polydispersed with a low polydispersion index, by means of methods of precipitation from solution which are capable of providing very high yields.

The present invention provides a process for preparing hydrated alumina consisting essentially of spherical particles, having a measured polydispersion index dw/dn less than or equal to 2, more particularly less than or equal to 1.20 (monodispersed particles), in which dw is the weight average diameter of the particles and dn is the number average diameter of the particles, by starting from an aqueous solution comprising aluminium sulphate, the molar ratio $SO_4^{=}/Al^{3+}$ being at least greater than 1, and carrying out the precipitation in the presence of a cationic polyelectrolyte, soluble under the reaction conditions and having an average molecular weight greater than 1 million and a ionicity of at least 3 milliequivalents per gram (meq/g), the said precipitation being carried out under such conditions as to obtain a homogeneous precipitation in the presence of at least one substance capable of releasing $OH^-$ ions.

Generally the $Al^{3+}$ concentrations of the starting solution can reach values of 0.6 moles/l, preferably of 0.4 moles/l.

Preferably, the cationic polyelectrolytes have a ionicity greater than 3.5 meq/g and a molecular weight of from 1 to 6 million, more preferably greater than 3 million.

The mechanism which has surprisingly led to the obtainment of hydrated alumina consisting essentially of spherical, non-aggregated and practically monodispersed particles by carrying out a homogeneous precipitation of aluminium sulphate in the presence of the cationic polyelectrolyte having the characteristics mentioned hereinabove, according to the invention, is not known.

In fact, the reaction solution contains a very great number of ion types, such as $OH^-$ deriving both from the alkaline agent and from the hydrolysis in the reaction conditions, $Al^{3+}$ ions, anions which derive from the aluminium salt, and optionally other ions introduced in order to obtain a $SO_4^{=}$ concentration such as to provide the above-mentioned $SO_4^{=}/Al^{3+}$ ratio, and the cationic species which occur in the reaction conditions.

It has been found that the results of the invention are not achieved if use is made of anionic polyelectrolytes exhibiting the same combination of ionicity and molecular weight indicated for the cationic polyelectrolytes.

Also, the results of the invention cannot be obtained if polymers are utilized, which have the indicated molecular weight but comprise only neutral non-ionic repeating units.

The cationic polyelectrolyte is preferably employed in an amount greater than 2.5% by weight with respect to the theoretical amount of $Al_2O_3$ corresponding to the initial aluminium contained in the solution.

More preferably, polyelectrolyte amounts greater than 3% by weight, in particular of at least 3.3% by weight, are used.

The cationic polyelectrolyte, before being used, is preferably dissolved in water in a concentration of a few g/l, generally of the order of 1 or 2 g/l.

It is possible to employ polyelectrolyte amounts higher than those indicated, for example of the order of 10 or 20% by weight, without giving rise to significant variations as regards morphology and granulometric distribution of the particles.

Generally is it possible to also use higher polyelectrolyte concentrations, provided the polyelectrolyte does not separate — in the reaction conditions — from the aqueous solution into a different phase.

The ionicity of the cationic polyelectrolytes is related to the number of cationic groups distributed along the whole polymeric chain. The cationic groups should be regularly distributed in the polymeric chain; if not, a reduction of the polyelectrolyte activity occurs.

It has been found that ionic groups concentrations corresponding to at least 3 meq/g are those which provide the best results. Preferably, the amount of cationic groups is greater than 4 meq/g.

The quantitative determination of the cationic polyelectrolyte ionicity is accomplished according to known methods, using an anionic polyelectrolyte as titrating agent. The method preferably employed in this invention is reported in "Polyelectrolyte Determination at Low Concentration" L. K. Wang and W. W. Shuster, Ind. Eng. Chem., Prod. Res. Dev., Vol. 14, No 4, 1975, pages 312—314, and permits the calculation of the milliequivalents per gram (meq/g) of positive charge present in the polyelectrolyte.

The anionic polyelectrolyte utilized as titrating agent is a commercial product, designated as PVSAK, consisting of the potassium salt of polyvinylsulphonic acid.

Furthermore it has been found that the more linear is the polyelectrolyte structure, the better is the electrolyte performance. The molecular weight being the same, a polyelectrolyte having a ramified structure exhibits a lower activity. However, cationic polyelectrolytes having side chains are also utilizable, provided they are soluble under the reaction conditions and are introduced in higher amounts.

The polyelectrolytes which are proved to be particularly suitable for the process of the invention are polymers comprising repeating units based on substituted acrylamide and having the general formula:

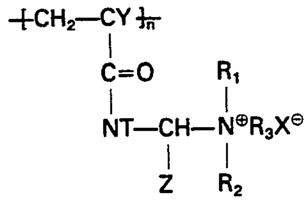

where

$R^1$, $R^2$, $R^3$, T are the same as or different from each other and are selected from H and aliphatic hydrocarbon radicals having from 1 to 4 carbon atoms;

Y is H or $-CH_3$;

Z is H or $-CH_3$;

X is an anion, in particular chloride or sulphate; and

n is an integer.

Polymers including the above-indicated units are obtainable from non-ionic polyacrylamide by means of conventional reactions, for example through the Mannich reaction.

Preferably, Y, Z and $R_3$ are H, and $R_1$ and $R_2$ are the same as or different from each other and are selected from H, $-CH_3$ and $-C_2H_5$.

Other cationic polyelectrolytes which may be used are the polyvinylamines, which can be obtained from polyacrylamides through the Hoffmann degradation reaction and subsequent quaternization of the nitrogen atom, according to known techniques, or through polymerization, according to known processes, of vinylamines and subsequent quaternization of nitrogen, said polyvinylamines having the general formula:

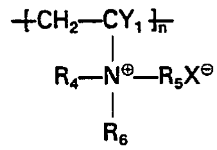

where

$R_4$, $R_5$, $R_6$ have the same meanings as $R_1$ indicated hereinbefore;

$Y_1$ is H or $-CH_3$; and

X and n have the meanings previously defined.

Preferably, $R_4$ is H, and $R_5$ and $R_6$ are the same as or different from each other and are selected from H, $-CH_3$, and $-C_2H_5$.

Generally, the preferred compounds are thus those in which Y, $Y_1$, Z, T, $R_3$ and $R_4$ are H, and $R_1$, $R_2$, $R_5$, $R_6$ are the same as or different from each other and are selected from H, $-CH_3$, and $-C_2H_5$.

The polymers which comprise the cationic units indicated hereinbefore may also contain neutral units of non-substituted acrylamide of general formula:

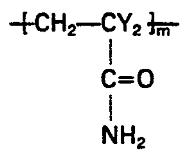

in which $Y_2$ is H or $-CH_3$, and m is an integer.

The neutral and cationic units are statistically distributed along the polymer chain, the ionicity and the molecular weight having the indicated values.

However, it is also possible to use copolmers in which the neutral unit can be selected from the following:

a) 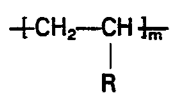

where R is H, or an aliphatic hydrocarbon radical having from 1 to 4 carbon atoms;

b) 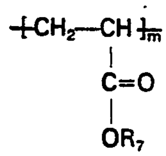

where $R_7$ has the same meaning as R;

c) 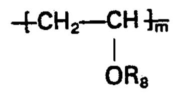

where $R_8$ has the same meaning as R;

d) 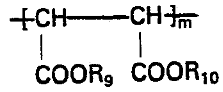

where $R_9$ and $R_{10}$ are the same or different from each other and have the same meaning as R;

e) 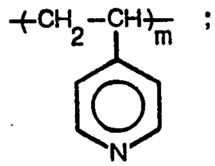

units deriving from polyvinylpyridines;

m in each case being an integer.

The copolymers containing the cationic units of acrylamide and the indicated neutral groups are prepared according to known processes.

In particular the polymers comprising the indicated ionic units and the groups of class a) are obtained by polymerization of an olefin $CH_2=CHR$ with acrylamide; those of class b) by polymerization of acrylamide with an acrylic acid ester; those of class c) by copolymerization of vinylether with acrylamide; those of class d) by copolymerization of maleic acid with acrylamide; and those of class e) by copolymerization of acrylamide with vinylpyridine.

The various neutral units indicated in the various groups can also be present simultaneously in the polymeric chain if more monomers are contemporaneously polymerized, the previously indicated molecular weight and ionicity values being in any case always observed.

The combinations of the various radicals contained in the above-indicated neutral and cationic groups are however selected such as to provide polymers which are soluble under the use conditions of the present invention.

In the various classes, the hydrocarbon radicals with 1 or 2 carbon atoms are particularly preferred.

The polyelectrolytes of the class of the polyamides are commercial products designated as Ecocolar, Praestol, Separan, and are available both in the solid state and in emulsions. (The words "Ecolar", "Praestol" and "Separan" are Trade Marks).

Preferably they are utilized by preparing aqueous solutions of the commercial polyelectrolyte at concentrations of 1—2 g/l at the moment of their use and by drawing the necessary amount. In fact, the aqueous solutions of these polyelectrolytes are stable for a short time, generally no longer than a few days.

Uniform precipitation may be achieved by introducing, into the reaction medium, substances capable of gradually and uniformly releasing $OH^-$ so as to avoid local oversaturation of the solution.

Any substance capable of releasing $OH^-$ ions in the above-indicated manner may be utilized. Preferred compounds are urea and formamide. The process of the present invention is operated at temperatures at which the substance is capable of releasing $OH^-$. However, in order to obtain quantiative yields of hydrated alumina in a short time it is necessary to operate at such temperatures that the release of the $OH^-$ ions may occur as quickly as possible.

Urea, for example, begins to release $OH^-$ ions at relatively low temperatures, of the order of 60°C, but when operating at temperatures around 80°C quantitative yields of alumina would be obtained in too long times, of the order of several hours, or it would be necessary to utilize very high urea amounts, which would involve an increase in costs and difficulties in solubilizing both the urea and the polyelectrolyte to obtain homogenous solutions.

It is preferable to operate at temperatures from 90° to 100°C in order to complete the precipitation in very short times.

In these conditions, urea/Al molar ratios ranging from 4 to 12, more preferably from 6 to 9, are employable. In these conditions, the alumina quantitative precipitation times are a few hours, generally 1 to 4 hours, and the spherical particles sizes are practically independent of the employed urea/Al ratios.

The process of the invention can be operated at atmospheric pressure or under pressure, in the latter case the times being further reduced.

As aluminium salt, aluminium sulphate is preferably utilized, but it is also possible to use mixed aluminium sulphates, such as those containing potassium, sodium and ammonium.

Generally, a mixture of the above-mentioned aluminium salts can also be used; it is possible to operate in the presence of sulphate ions obtained by addition for example of sodium sulphate, ammonium sulphate and potassium sulphate.

It is possible also to use a mixture of aluminium sulphate with aluminium nitrate, chloride, perchlorate, acetate, or formate, provided the amount of $Al^{3+}$ deriving from the salts other than the sulphate is of the order of 5—10%, generally not higher than 20% by weight referred to the total aluminium introduced.

The results of the invention are still the more surprising as it has been found that, when starting from aluminium salt solutions containing about 30 mole% of $Al^{3+}$ in the form of the remaining part in the form of sulphate, even by operating in the presence of sulphate ions in such amounts as to have a $SO_4^{=}/Al^{3+}$ ratio ranging from 1 to 1.5 and by operating according to the process of the invention, the resulting hydrated alumina does not exhibit the spherical morphology and contains aggregates.

The same negative results are obtained when using $Al(NO_3)_3$ instead of $AlCl_3$ at the indicated concentrations.

The hydrated alumina obtained by the process of the invention appears, under X-ray powder analysis, to be in the amorphous phase.

Crystalline alumina with a variable water content, having the same morphology and granulometric distribution as the amorphous hydrated alumina prepared by the process of the invention is obtained by subjecting the hydrated alumina to thermal treatment according to known processes. By carrying out a particular heat treatment described in EP—A—0188138 it is possible to obtain also the alpha phase having the same granulometric and morphological characteristics of the amorphous precursor.

We have observed that with the particular hydrated alumina obtained by the process of the present invention it is possible to carry out the heat treatment, that is continuation of times and temperatures, also out of the lines of the Figure 1 indicated in EP—A—0188138 in order to obtain alpha alumina maintaining the spherical form of the precursor.

The average sizes (dw and dn) as well as the morphological and granulometric characteristics are determined under the electron microscope by the TEM technique. The method of determining dw and dn is described by E. A. Collins, J. A. Davidson and C. A. Daniels in "Review of Common Methods of Particles Size Measurement", Journal of Paint Technology, Vol. 47, No. 604, May 1975.

The hydrated alumina particles obtained by the process of the present invention have diameters ranging from 0.06 to 3 µm.

Generally, the highest yields are obtained in the range from 0.1 to 2 µm. Productivities of the order of 1—25 g/l.hour are easily achievable through the process of the invention generally, the greater the particle diameter, the higher the productivity.

Actually it has been found that the diameter of the spherical particles of hydrated alumina is strictly related to the Al concentration of the starting solutions.

For example, starting from A1 concentrations of 0.1 moles/l and operating under the preferred conditions of the invention, sizes of about 0.3 µm are obtained, the productivity being about 5 g/l.hour. Using starting Al concentrations of 0.2 moles/l, the alumina diameter is about 0.5 µm and the productivity about 10 g/l.hour; with Al concentrations of 0.3 M, the diameter ranges from 0.7 to 0.8 µm, with the productivity being 15 g/l.hour; with Al concentrations of 0.4 M, the diameter is 0.8 µm and the productivity 20 g/l.hour.

Using solutions at Al concentration of 0.025 M, diameters of about 0.1 µm are obtained, the productivity being approximately 2 g/l.hour.

The diameter of the alumina particles is also influenced by stirring of the reaction medium, provided said stirring is such as to cause turbulence in the system.

The starting concentrations being the same, an intense stirring permits greater diameters to be obtained. For example, starting from an initial concentration of 0.2 M of Al, particles of about 1 micron diameter may be obtained. The effect of stirring is also briefly illustrated in the Examples described subsequently.

The alumina obtainable by the process of the present invention is very pure. The highest impurity, which desirably should be reduced to the aluminum, is sulphur which derives from the use of the aluminium sulphate solution, which is necessary in order to obtain the results of the process of this invention.

It has been found that the sulphur amount strictly depends on the final pH of the suspension at the end of precipitation.

By heating $Al^{3+}$ salt solution in the presence of urea to a temperature of about 100°C it is possible to observe a slow but progressive increase in the pH, from starting values of 1.5—2.5 (as a function of the $Al^{3+}$ salt concentration and of the molar ratio urea/$Al^{3+}$) up to values around 3—3.5. The formation of the hydrated alumina precipitate occurs during this step, successively a quick increase in the pH up to values of 4.5—5.5 takes place, whereafter the pH increase considerably slows down. At pH values around 4, the precipitation $Al^{3+}$ can be considered as concluded, whereupon the precipitate can be separated from the mother liquors by means of any technique suited to the purpose, such as for example centrifugation and filtration. In particular, when the latter technique is utilized, it may be advantageous to subject the particles at first to a flocculation treatent to facilitate the filtration. Dilute solutions (0.1—0.5 g/l) of an anionic polyelectrolyte are particularly suited to such purpose. The flocculated product can also be washed by decantation. The flocculation treatment does not involve any modification of the granulometric characteristics of the individual alumina particles.

Although the $Al^{3+}$ precipitation is already complete at a pH value of 4, it may be sometimes preferable to reach pH values higher than 4, because it has been found that the higher is the pH of the suspension, the higher is the purity, in terms of sulphur content, of the precipitated Al hydroxide.

By operating in this manner, the following sulphur percentages in the hydrated alumina, dried at about 100°C, are obtained:

pH 4 — 6.1% by weight
pH 5.5 — 3.7% by weight
pH 6 — 2.6% by weight

Of course it is possible to further increase the pH by heating for longer times in the presence of urea; the same effect, however, is attainable by direct addition of alkali to the suspension. In fact, since at pH 4 the precipitation of $Al^{3+}$ is complete, the addition of alkali does not cause, at this point, any uncontrolled nucleation phenomena, but only an increase in the pH of the suspension. It is necessary that the final pH should not exceed a value of 6, because then higher pH leads to particles aggregation and to loss of sphericity.

It is possible to further reduce the sulphur content in the precipitated hydroxide by suspending the same, after removal of the mother liquor, in alkaline solutions, at pH values ranging from 8 to 9.5 and at temperatures of from 15° to 50°C.

As alkaline solutions, $NH_4HCO_3$ solutions at 1—3% by weight, additioned with ammonia solution in such amount that the pH of the hydrated alumina suspension can reach the preselected value, prove to be advantageous.

The final sulphur content obtained after the treatment described hereinbefore may be reduced to 0.6% by weight.

Furthermore it is possible to further reduce the sulphur content by carrying out thermal treatment.

The hydrated alumina obtained by the process of the invention, which is always obtained in the amorphous phase, as determined from the X-ray powder spectrum, can be converted, as already indicated, to the various crystalline forms through thermal treatments. It has been found, however, that an almost complete removal of sulphur is obtained if the amorphous hydrated alumina utilized as a precursor contains the least possible amount of sulphur.

By effecting heat treatment, as stated above and described in a preceding patent application, with a view to obtaining alpha alumina consisting essentially of particles which retain the same granulometric and morphological characteristics of the precursor, final sulphur amounts below or equal to 25 ppm may be obtained.

The invention will be further described with reference to the following illustrative Examples.

In the examples, reference will be made to the accompanying drawings, in which Figures 1 to 5 are respectively photographs of samples of the products of Examples 1, 1A, 3, 4, and 8, at appropriate magnifications.

## Example 1

0.3 g of a commercial polyelectrolyte, ECOCLAR 8107, were dissolved, under stirring, in 480 ml of $H_2O$. The polyelectrolyte had a molecular weight of 3—4 million and a positive inonicity, measured by titration with PVSAK, of 4.94 milliequivalents/g (meq/g).

The solution was introduced into a 1-liter flask equipped with a reflux cooler, an electrode for the pH measurement and a thermometer. 100 ml of a solution containing 200 g/l of commercial $Al_2(SO_4)_3.18H_2O$ (0.6 moles/l of $Al^{3+}$ ) and, finally, 32.4 g of urea were added. The final volume of the solution was about 600 ml. The solution was heated to 100°C without stirring. During about 60 minutes the pH rose from 2.6 to 5.0. Already at pH 3 the solution began to turn opalescent and it became more and more turbid as the pH increased. The suspension was centrifuged, and the product was washed and dried at 120°C for a few hours to constant weight.

There were obtained 5.9 g of hydrated alumina which, subjected to TEM analysis, was found to consist essentially of spherical, uniform, almost monodispersed particles (dw/dn = 1.1) with a mean diameter of about 0.3 µm.

Figure 1 shows a photograph of a sample of the product obtained, at a magnification of 4850 times. An X-ray spectrum of the powder indicated that the product was amorphous.

## Example 1A (Comparative Example)

Into a 1 liter flask, equipped with reflux cooler, electrode for the pH measurement and thermometer, there were introduced 100 ml of a solution containing 200 g/l of $Al_2(SO_4)_3.18\ H_2O$ (0.6 moles/liter of Al). A solution of 32.4 g of urea in 480 ml of $H_2O$ was added thereto, followed by heating to 100°C, without stirring. At 100°C, the pH of the solution was 2.6. During 60 minutes the pH rose to 5.0.

The precipitate was filtered, and washed and dried at 120°C for a few hours. It weighted 5.8 g; X-ray analysis revealed that it consisted of an amorphous phase; on TEM analysis (Figure 2, magnification 4850 times), it was found to consist of particles of various sizes, very aggregated and without well defined morphological characteristics; in particular, no presence of spherical particles was observed.

## Example 2

0.3 g of ECOCLAR 8107 were dissolved in 350 ml of $H_2O$ under stirring. The solution was introduced into the reactor described in Example 1, along with 200 ml of a solution containing 200 g/l of $Al_2(SO_4)_3.18\ H_2O$ and with 64.8 g of urea. The final volume was about 600 ml. The solution was heated to 100°C without stirring, until the pH reached a value of 5.0 (in about 60 minutes).

The obtained precipitate, after separation from the mother liquor by centrifugation, under TEM analysis was found to consist essentially of spherical, uniform and almost monodispersed particles having a mean diameter of about 0.5 μm. An X-ray spectrum of the powder of the sample indicated that the alumina product was amorphous.

Example 3

Example 2 was repeated under the same conditions, but using 43.2 g of urea. The time required to attain a pH of 5.0 was approximately 100 minutes. The TEM analysis of the precipitate (Figure 3, magnification 4850 times) did not indicate substantial variations with respect to that of Example 2 as regards the morphological and granulometric characteristics; the diameter of the spherical particles was equal to 0.5 μm. X-ray analysis indicated that the product was amorphous.

Example 4

Example 3 was repeated using the same reactor, but stirring the solution by means of a blade stirrer rotating at about 500 r.p.m. The TEM analysis of the precipitate evidenced a remarkable growth of the granules — the sizes thereof being in fact around 1.2 μm — and a dw/dn ratio equal to 1.15. The morphology of the particles, however, did not exhibit any changes. A TEM photograph of a sample of the product is shown in Figure 4. X-ray analysis indicated that the product was amorphous.

Example 5

Example 2 was repeated under the same conditions, but using 28.8 g of urea. The time necessary to attain a pH of 5.0 was approximately 220 minutes. The TEM analysis of the sample did not show any substantial variation as compared with that of Example 2; X-ray analysis indicated that the product was amorphous.

Example 6

Example 3 was repeated under the same conditions, but heating the solution to 95°C instead of to 100°C. This time required to attain a pH of 5.0 was about 240 minutes. The TEM analysis of the precipitate did not reveal any substantial variations with respect to that of Example 3.

Example 7

0.3 g of polyelectrolyte ECOCLAR 8017 were dissolved in 220 ml of $H_2O$ under stirring. The solution was introduced into the reactor described in Example 1, along with 300 ml of a solution containing 200 g/l of $Al_2(SO_4)_3.18\ H_2O$ and 97.2 g of urea. The solution (final volume of about 600 ml) was heated to 100°C without stirring, until a pH value of 5.5 (in about 70 minutes) was attained. The TEM analysis of the precipitate indicated that it consisted essentially of spherical particles having a mean diameter of 0.75 μm.

Example 8

0.076 g of polyelectrolyte ECOCLAR 8017 were dissolved in 100 ml of $H_2O$ under stirring. The solution was introduced into the reactor described in Example 1, equipped with a blade stirrer rotating at about 60 r.p.m. After having diluted the solution with 470 ml of $H_2O$, 25 ml of a solution containing 200 g/l of $Al_2(SO_4)_3.18\ H_2O$ and 8.1 g of urea were added thereto. The resulting solution (final volume of about 600 ml) was heated to 100°C under stirring, until a pH value of 5.0 was attained (about 65 minutes). The TEM analysis of the precipitate revealed that it consisted essentially of spherical particles having a mean diameter of about 0.11 μm. A photograph of a sample of the product is shown in Figure 5 (magnification: 4850 times).

Example 9

1.2 g of polyelectrolyte ECOCLAR 8017 were dissolved in 400 ml of $H_2O$, under stirring. The solution was poured into the reactor described in Example 1, equipped with a blade stirrer rotating at about 60 r.p.m. 200 ml of a solution containing 200 g/l of $Al_2(SO_4)_3.18\ H_2O$ and 42.2 g of urea was added. The solution (final volume of about 650 ml) was heated to 100°C under stirring, until a pH value of 5.0 was attained (approximately 90 minutes). The TEM analysis of the precipitate indicated that it consisted essentially of spherical particles having a mean diameter of about 0.45 μm and a particle size distribution similar to that of Example 3.

Example 10

There were prepared a solution of 0.6 g of polyelectrolyte ECOCLAR 8017 in 300 ml of $H_2O$ and a solution of $Al_2(SO_4)_3$ by dissolving 80.0 g of $Al_2(SO_4)_3.18\ H_2O$ in an amount of water sufficient to obtain a volume of 250 ml.

The two solutions were transferred into the reactor described in Example 1, equipped with a blade stirrer rotating at about 60 r.p.m. 86.4 g of urea were added and the solution was heated to 100°C under stirring, until a pH value of 5.0 was attained (about 90 minutes). The TEM analysis of the precipitate revealed that it consisted essentially of spherical particles with a mean diameter of about 0.8 μm.

Examples 11—26

Example 2 was repeated, but varying in each case the type of electrolyte employed and/or the introduced amount. In Table 1, the results obtained from the TEM analysis of the precipitate are indicated

as positive (P) or negative (N) depending on whether the sample consisted of spherical, almost monodispersed, sub-micronic particles, or of polydispersed aggregates and non-spherical particles.

TABLE 1

| Example | Polyelectrolyte | Amount (g) | Result |
|---|---|---|---|
| 11 | ECOCLAR 8337 | 0.3 | P |
| 12 | ECOCLAR 8032 | 0.3 | N |
| 13 | ECOCLAR 8032 | 0.6 | N |
| 14 | ECOCLAR 8032 | 0.9 | N |
| 15 | ECOCLAR 8038 | 0.3 | N |
| 16 | *CYANAMER P250 | 0.3 | N |
| 17 | ECOCLAR 8008 | 0.3 | N |
| 18 | ECOCLAR 8008 | 0.9 | N |
| 19 | ECOCLAR 8002 | 0.3 | N |
| 20 | ECOCLAR 8105 | 0.3 | N |
| 21 | PRAESTOL 444K | 0.3 | P |
| 22 | PRAESTOL 334K | 0.3 | P |
| 23 | ECOCLAR 8043 | 0.3 | N |
| 24 | ECOCLAR 8043 | 0.9 | N |
| 25 | ECOCLAR 8017 + ECOCLAR 8032 | 0.3 + 0.3 | P |
| 26 | ECOCLAR 8017 | 0.1 | N |

*The word "Cyanamer" is a Trade Mark.

The characteristics of the polyelectrolytes used herein are, with regard to molecular weight and ionicity, the following:

| Polyelectrolyte type | molecular weight (in millions) | ionicity type | meq/g |
|---|---|---|---|
| Ecoclar 8337 | 4—5 | cationic | 4.99 |
| Ecoclar 8032 | 4—5 | cationic | 2.74 |
| Ecoclar 8038 | 6—7 | cationic | 1.23 |
| Cyanamer P250 | 5—6 | non-ionic | — |
| Ecoclar 8008 | 6—7 | non-ionic | — |
| Ecoclar 8002 | 7—8 | anionic | n.d. |
| Ecoclar 8105 | 7—8 | anionic | 4.75 |
| Praestol 444K | 4 | cationic | 4.24 |
| Praestol 334K | 3 | cationic | 3.97 |
| Ecoclar 8043 | 0.25 | cationic | 4.59 |

n.d. = not determined

Example 27 (Comparative Example)

Example 2 was repeated, except that instead of 200 ml of aluminium sulphate solution there were utilized 133.6 ml of the same solution and 66.3 ml of an $Al(NO_3)_3.9\ H_2O$ solution (225. g/l). The resulting solution had therefore an $Al^{3+}$ concentration (0.2 moles/l) similar to that of Example 2; the resulting molar ratio $SO_4^{=}/Al^{3+}$ was equal to 1.0. The TEM analysis of the resulting precipitate revealed that it consisted of aggregates of dimensionally polydispersed and morphologically heterogeneous particles with a nearly complete absence of spherical particles.

Example 28 (Comparative Example)

Example 2 was repeated, except that instead of 200 ml of aluminium sulphate solution there were employed 133.6 ml of the same solution and 66.3 ml of a solution at 144.9 g/l of $AlCl_3.6\ H_2O$. The final solution had therefore the same $Al^{3+}$ concentration (0.2 moles/liter) as in Example 2; the resulting molar ratio $SO_4^{=}/Al^{3+}$ was equal to 1.0. The TEM analysis of the precipitate obtained revealed that it consisted of aggregates of dimensionally polydispersed and morphologically heterogeneous particles, although spherical particles could be observed.

Example 29

Example 2 was repeated by drawing a sample of the slurry as soon as the pH, at the reaction temperature, reached the value of 4.0 (after a heating time of about 50 minutes). Immediately after the sample drawing a 15 M $NH_3$ solution was introduced into the reactor until there was attained, always at 100°C a pH value equal to 5.5, and another slurry sample was drawn. In a like manner, after having brought the pH values to 6 and 7 by addition of $NH_3$, two further samples were drawn. The drawn samples were centrifuged, and the precipitates, after washing with water until removal of the $SO_4$ ions from the filtrate, were dried in an oven at 120°C to constant weight. On TEM analysis, the samples drawn at pH values equal to 4, 5.5 and 6 were found to be completely identical with that of Example 2 and consisted essentially of spherical, uniform and almost monodispersed particles having diameters of about 0.5 μm.

Conversely, the sample drawn at pH = 7 exhibited phenomena of incipient aggregation and loss of sphericity. On the same samples the % of S was determined, the results being as follows:

| pH at drawing (at 100°C) | S (% by weight) |
|---|---|
| 4 | 6.1 |
| 5.5 | 3.7 |
| 6 | 2.6 |

Example 30

Example 3 was repeated under the same conditions, except that when the pH of the suspension attained a pH value of 4 (after about a 80 minute-heating at 100°C), and aqueous 15 M solution of $NH_3$ was added in order to directly bring the pH value of 5.5 by utilizing about 10 ml of said solution. The precipitate was centrifuged, transferred into a beaker and suspended, under stirring, in 100 ml of a $NH_4HCO_3$ solution (25 g/l), while adjusting the pH to a value of 9.5 by addition of a $NH_3$ solution. After a few minutes it was centrifuged, the precipitate was repeatedly washed with $H_2O$, and drying was carried out at 120°C in an oven until a constant weight (9.3 g) was attained. The % of S was determined on the dried product and was found to be 0.6%. The TEM analysis indicated that no modification of the hydrated alumina characteristics had occurred with respect to those of Example 3.

Example 31

2.0 g of the hydrated alumina obtained in Example 30 was calcined in a horizontal furnace at 910°C for 60 minutes at a temperature increase velocity of 300°C/h. During this Example, an air stream was caused to flow in the furnace at a space hourly velocity equal to 15. There were obtained 1.28 g of a powder which, on X-ray analysis, was found to be exclusively consist of delta-$Al_2O_3$ (standard J.C.P.D.S. No. 16—934). The TEM analysis revealed that the delta-$Al_2O_3$ particles had retained the spherical morphology and the excellent monodispersion characteristics of the starting hydrated oxide; the particles diameter was lower by about 10% than that of the starting hydroxide.

Example 32

1.0 g of delta-$Al_2O_3$ obtained in Example 31 was calcined at 1300° for 120 seconds in the manner described in EP—A—0188138. There was obtained 0.98 g of a powder which, upon X-ray analysis (standard J.C.P.D.S. No. 10—173), was found to exclusively consist of alpha-$Al_2O_3$. The TEM analysis revealed that the particles of alpha-$Al_2O_3$ had retained the spherical morphology and the excellent monodispersion characteristics of the starting delta-$Al_2O_3$. The sulphur content was 25 ppm.

Example 33

2.0 g of the hydrated alumina obtained in Example 30 were calcined under the conditions specified in Example 32. There were obtained 1.25 g of powder which, upon X-ray analysis, was found to exclusively consist of alpha-$Al_2O_3$. The morphological and granulometric characteristics of the powder, as revealed by TEM analysis, were very similar to those of the alpha-$Al_2O_3$ obtained in Example 32.

**Claims**

1. A process for preparing hydrated alumina consisting essentially of spherical particles having a diameter of from 0.06 to 3 micrometres and having a polydispersion index dw/dn less than or equal to 2, in which dw is the weight average diameter and dn is the number average diameter of the particles, characterized by starting from an aqueous solution comprising aluminium sulphate, the ratio $SO_4^{=}/Al^{3+}$ being greater than 1, and carrying out precipitation in the presence of a cationic polyelectrolyte, soluble under the reaction conditions, in such a concentration as not to form a phase separate from the aqueous solution, and having a mean molecular weight greater than 1 million and an ionicity of at least 3 milliequivalents per gram (meq/g), the said precipitation being carried out under such conditions as to obtain a homogeneous precipitation in the presence of at least one substance capable of releasing $OH^-$ ions under the reaction conditions.

2. A process as claimed in claim 1, characterized in that the polydispersion index dw/dn is less than or equal to 1.20.

3. A process as claimed in claim 1 or 2, characterized in that the $Al^{3+}$ concentration in the starting solution is not greater than 0.6 moles/liter.

4. A process as claimed in claim 3, characterized in that the $Al^{3+}$ concentration in the starting solution is not greater than 0.4 moles/liter.

5. A process as claimed in any one of claims 1 to 4, characterized in that the cationic polyelectrolyte has a ionicity greater than 3.5 meq/g and a mean molecular weight greater than 3 million.

6. A process as claimed in any of claims 1 to 5, characterized in that the cationic polyelectrolyte is employed in an amount greater than 2.5% by weight with respect to the theoretical amount of alumina corresponding to the starting aluminium contained in the solution.

7. A process as claimed in claim 6, characterized in that the cationic polyelectrolyte concentration is greater than or equal to 3.3% by weight.

8. A process as claimed in any of claims 1 to 7, characterized in that the cationic polyelectrolyte comprises repeating units based on substituted acrylamide of general formula:

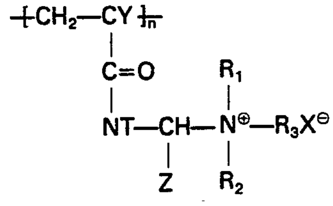

where

$R^1$, $R^2$, $R^3$, T are the same as or different from each other and are selected from hydrogen and hydrocarbon radicals having from 1 to 4 carbon atoms;

Y is H or $—CH_3$;

Z is H or $—CH_3$;

X is an anion; and

n is an integer.

9. A process as claimed in claim 8, characterized in that Y, Z and $R_3$ are H, and $R_1$ and $R_2$ are the same as or different from each other and are selected from H, $—CH_3$ and $—C_2H_5$.

10. A process as claimed in any of claims 1 to 7, characterized in that the cationic polyelectrolyte comprises repeating units based on vinylamine of general formula:

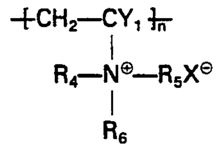

wherein $R_4$, $R_5$, $R_6$ are the same as or different from each other and are selected from hydrogen and hydrocarbon radicals having from 1 to 4 carbon atoms;

$Y_1$ is H or $—CH_3$;

X is an anion; and

n is an integer.

11. A process as claimed in claim 10, characterized in that $R_4$ is H, and $R_5$ and $R_6$ are the same as or different from each other and are selected from H, $—CH_3$, and $—C_2H_5$.

12. A process as claimed in claim 8 or 9, characterized in that the polyelectrolyte comprises, in addition to the ionic units, neutral units of non-substituted acrylamide of general formula:

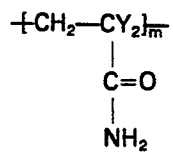

in which $Y_2$ is H or $—CH_3$, and m is an integer; and in that the ionic and neutral units are statistically distributed along the polymer chain.

13. A process as claimed in claim 8 or 9, characterized in that the cationic polyelectrolyte consists of a copolymer comprising the said positively charged units defined in claim 8, and neutral units other than those of the acrylamide and statistically distributed along the polymer chain.

14. A process as claimed in claim 13, characterized in that the said neutral units are selected from the following:

a) 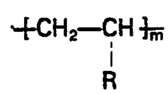

where R is H, or a hydrocarbon radical having from 1 to 4 carbon atoms;

b) 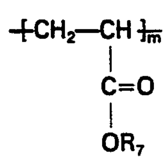

where $R_7$ has the same meaning as R;

c) 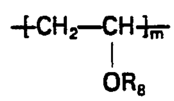

where $R_8$ has the same meaning as R;

d) 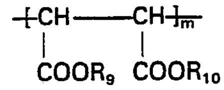

where $R_9$ and $R_{10}$ are the same or different from each other and have the same meaning as R;

e) 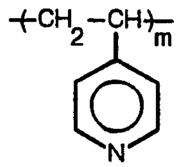 ;

m in each case being an integer.

15. A process as claimed in any of claims 1 to 14, characterized in that the homogeneous precipitation is carried out in the presence of urea or formamide.

16. A process as claimed in claim 15, characterized in that the reaction temperature is from 90° to 100°C.

**Patentansprüche**

1. Verfahren zur Herstellung von hydratisiertem Aluminiumoxid, das im wesentlichen aus kugelförmigen Teilchen mit einem Durchmesser von 0,06 bis 3 µm, besteht und einen Polydispersionsindex dw/dn kleiner oder gleich 2 hat, wobei dw das Gewichtsmittel des Durchmessers und dn das Zahlenmittel des Durchmessers der Teilchen bedeutet, dadurch gekennzeichnet, daß man ausgeht von einer wässrigen Lösung, die Aluminiumsulfat umfaßt, wobei das Verhältnis $SO_4^{2+}/Al^{3+}$ größer 1 ist, und die Ausfällung in Gegenwart eines kationischen Polyelektrolyten durchführt, der unter den Reaktionsbedingungen in einer solchen Konzentration löslich ist, daß keine von der wässrigen Lösung separate Phase entsteht, und ein mittleres Molekulargewicht von mehr als 1 Million und eine Ionizität von mindestens 3 Milliäquivalenten pro Gramm (mÄq/g) hat, wobei die Ausfällung unter solchen Bedingugen durchgeführt wird, daß eine homogene Ausfällung in Gegenwart mindestens einer Substanz erfolgt, die befähigt ist, $OH^-$ Ionen unter den Reaktionsbedingungen freizusetzen.

2. Verfahren nach Anspruch 1, dadurch gekennzeichnet, daß der Polydispersionsindex dw/dn kleiner oder gleich 1,20 ist.

3. Verfahren nach Anspruch 1 oder 2, dadurch gekennzeichnet, daß die $Al^{3+}$-Konzentration in der Ausgangslösung nicht mehr als 0,6 Mol/Liter beträgt.

4. Verfahren nach Anspruch 3, dadurch gekennzeichnet, daß die $Al^{3+}$-Konzentration in der Ausgangslösung nicht mehr als 0.4 Mol/Liter beträgt.

5. Verfahren nach irgendeinem der Ansprüche 1 bis 4, dadurch gekennzeichnet, daß der kationische Polyelektrolyt eine Ionizität über 3,5 mÄq/g und ein mittleres Molekulargewicht über 3 Millionen hat.

6. Verfahren nach irgendeinem der Ansprüche 1 bis 5, dadurch gekennzeichnet, daß der kationische Polyelektrolyt in einer Menge über 2,5 Gewichtsprozent verwendet wird, bezogen auf die theoretische Aluminiumoxidmenge, die dem in der Lösung enthaltenen Ausgangsaluminium entspricht.

7. Verfahren nach Anspruch 6, dadurch gekennzeichnet, daß daß die Konzentration des kationischen Polyelektrolyten größer oder gleich 3,3 Gewichtsprozent ist.

8. Verfahren nach irgendeinem der Ansprüche 1 bis 7, dadurch gekennzeichnet, daß der kationische Polyelektrolyt Struktureinheiten auf Basis eines substituierten Acrylamids der allgemeinen Formeld:

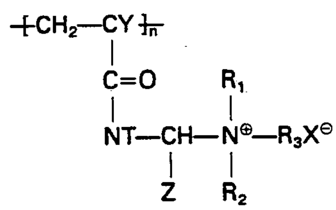

umfaßt, wobei

$R_1$, $R_2$, $R_3$, T gleich oder verschieden voneinander ausgewählt sind unter Wasserstoff und Kohlenwasserstoffresten mit 1 bis 4 Kohlenstoffatomen;

Y H oder $—CH_3$ ist;

Z H oder $—CH_3$ ist;

X ein Änion ist und

n eine ganze Zahl ist.

9. Verfahren nach Anspruch 8, dadurch gekennzeichnet, daß Y, Z und $R_3$ H sind und $R_1$ und $R_2$ gleich oder verschieden voneinander ausgewählt sind unter H, $—CH_3$ und $—C_2H_5$.

10. Verfahren nach irgendeinem der Ansprüche 1 bis 7, dadurch gekennzeichnet, daß der kationische Polyelectrolyt Struktureinheiten auf Basis eines Vinylamins der allgemeinen Formel:

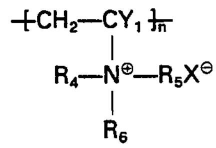

umfaßt, worin

$R_4$, $R_5$, $R_6$ gleich oder verschieden voneinander ausgewählt sind unter Wasserstoff und Kohlenwasserstoffresten mit 1 bis 4 Kohlenstoffatomen;

$Y_1$ H oder $—CH_3$ ist;

X ein Anion ist; und

n eine gauze Zahl ist.

11. Verfahren nach Anspruch 10, dadurch gekennzeichnet, daß $R_4$ H ist und $R_5$ und $R_6$ gleich oder verschieden voneinander ausgewählt sind unter H, $—CH_3$ und $—C_2H_5$.

12. Verfahren nach Anspruch 8 oder 9, dadurch gekennzeichnet, daß der Polyelektrolyt zusätzlich zu den ionischen Einheiten neutrale Einheiten von unsubstituiertem Acrylamid der allgemeinen Formel:

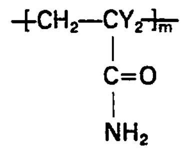

umfaßt, worin $Y_2$ H oder $—CH_3$ ist und m eine ganze Zahl ist; und daß die ionischen und neutralen Einheiten statitisch entlang der Polymerkette verteilt sind.

13. Verfahren nach Anspruch 8 oder 9, dadurch gekennzeichnet, daß der kationische Polyelektrolyt aus einem Copolymer besteht, das positiv geladene Einheiten nach Anspruch 8 und neutrale Einheiten umfaßt, die von denen des Acrylamids verschieden sind und statistisch entlang der Polymerketter verteilt sind.

14. Verfahren nach Anspruch 13, dadurch gekennzeichnet, daß die neutralen Einheiten aus den folgenden ausgewählt sind:

a) 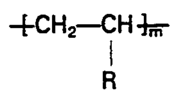

worin R H oder ein Kohlenwasserstoffrest mit 1 bis 4 Kohlenstoffatomen ist;

b) 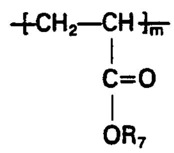

worin $R_7$ dieselbe Bedeutung wie R hat;

c) 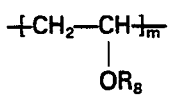

worin $R_8$ dieselbe Bedeutung wie R hat;

d) 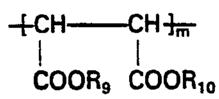

worin $R_9$ und $R_{10}$ gleich oder verschieden voneinander dieselbe Bedeutung wie R haben;

e) 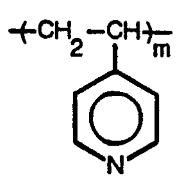 ;

wobei m in jedem Fall eine ganze Zahl ist.

15. Verfahren nach irgendeinem der Ansprüche 1 bis 14, dadurch gekennzeichnet, daß die homogene Ausfällung in Gegenwart von Harnstoff oder Formamid durchgeführt wird.

16. Verfahren nach Anspruch 15, dadurch gekennzeichnet, daß die Reaktionstemperatur 90 bis 100°C beträgt.

**Revendications**

1. Un procédé de préparation d'alumine hydratée constituée essentiellement de particules sphériques, présentant un indice de polydispersion mesuré dw/dn inférieur ou égal à 2, plus particulièrement inférieur ou égal à 1,20 (particules monodispersées), dans lequel dw représente le diamètre pondéral moyen des particules et dn représente le diamètre numérique moyen des particules, caractérisé en ce que l'on part d'une solution aqueuse comprenant du sulfate d'aluminium, le rapport molaire $So_4^{=}/Al^{3+}$ étant au moins supérieur à 1, et on met la précipitation en oeuvre en présence d'un polyélectrolyte cationique, soluble dans les conditions de la réaction et dont le poids moléculaire moyen est supérieur à l million et le caractère ionique ou inoicité est au moins égal à 3 milliéquivalents par gramme (meq/g), cette précipitation étant mise en oeuvre dans conditions propres à obtenir une précipitation homogène en présence d'au moins une substance capable de libérer des ions $OH^-$.

2. Un procédé selon la revendication 1, caractérisé en ce que l'indice de polydispersion dw/dn est inférieur ou égal à 1,20.

3. Un procédé selon la revendication 1 ou 2, caractérisé en ce que la concentration en $Al^{3+}$ dans la solution de départ n'est pas supérieure à 0,6 mole/litre.

4. Un procédé selon la revendication 3, caractérisé en ce que la concentration en $Al^{3+}$ dans la solution de départ n'est pas supérieure à 0,4 mole/litre.

5. Un procédé selon l'une quelconque des revendications 1 à 4, caractérisé en ce que l'ionicité du polyélectrolyte cationique est supérieure à 3,5 meq/g et son poids moléculaire moyen supérieur à 3 millions.

6. Un procédé selon l'une quelconque des revendications 1 à 5, caractérisé en ce que le polyélectrolyte cationique est employé en quantité supérieure à 2,5% en poids par rapport à la quantité théorique d'alumine correspondant à l'aluminium de départ contenu dans la solution.

7. Un procédé selon la revendication 6, caractérisé en ce que la concentration du polyélectrolyte cationique est supérieure ou égale à 3,3% en poids.

8. Un procédé selon l'une quelconque des revendications 1 à 7, caractérisé en ce que le polyélectrolyte cationique comprend des motifs répétitifs à base d'acrylamide substitutée répondant à la formule générale:

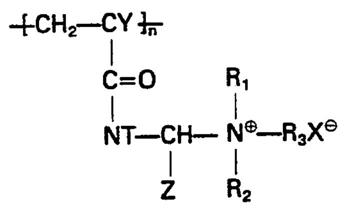

dans laquelle

$R_1$, $R_2$, $R_3$, T sont indentiques ou différents les uns des autres et sont choisis parmi l'hydrogène et des radicaux hydrocarbures renfermant de 1 à 4 atomes de carbone;

Y représente H ou $-CH_3$;

Z représente H ou $-CH_3$;

X représente un anion, et

n représente un nombre entier.

9. Un procédé selon la revendication 8, caractérisé en ce que Y, Z et $R_3$ représente H, et $R_1$ et $R_2$ sont identiques ou différents l'un de l'autre et sont choisis parmi H, $-CH_3$ et $-C_2H_5$.

10. Un procédé selon l'une quelconque des revendications 1 à 7, caractérisé en ce que le polyélectrolyte cationique comprend des motifs répétitifs à base de vinylamine répondant à la formule générale:

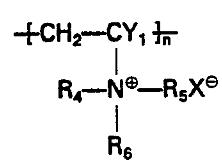

dans laquelle

$R_4$, $R_5$, $R_6$ sont identiques ou différents les uns des autres et sont choisis parmi l'hydrogène et des radicaux hydrocarbures renferment de 1 à 4 atomes de carbone;

$Y_1$ représente H ou $-CH_3$;

X représente un anion, et

n représente un nombre entier.

11. Un procédé selon la revendication 10, caractérisé en ce que $R_4$ représente H, et $R_5$ et $R_6$ sont identiques ou différents l'un de l'autre et sont choisis parmi H, $—CH_3$ et $—C_2H_5$.

12. Un procédé selon la revendication 8 ou 9, caractérisé en ce que, en plus des motifs ioniques, le polyélectrolyte comprend des motifs neutres d'acrylamide non-substitué de formule générale:

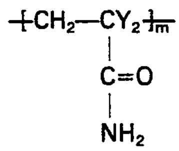

dans laquelle $Y_2$ représente H ou $—CH_3$, et m est un nombre entier; et en ce que les motifs ioniques et neutres sont distribués statistiquement le long de la chaîne polymère.

13. Un procédé selon l'une des revendications 8 ou 9, caractérisé en ce que le polyélectrolyte cationique est constitué d'un copolymère comprenant lesdits motifs de charge positive définis dans la revendication 8, et des motifs neutres autres que ceux de l'acrylamide et statistiquement distribués le long de la chaîne polymère.

14. Un procédé selon la revendication 13, caractérisé en ce que ces motifs neutres sont choisis parmi les suivants:

a) 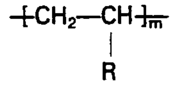

dans lequel R représente H ou un radical hydrocarbure renfermant de 1 à 4 atomes de carbone;

b) 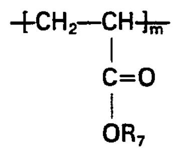

dans lequel $R_7$ présente la même signification que R;

c) 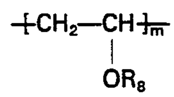

dans lequel $R_8$ présente la même signification que R;

d) 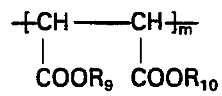

dans lequel $R_9$ et $R_{10}$ sont identiques ou différents l'une de l'autre et présentent la même signification que R;

e) 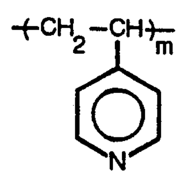 ;

m étant dans chaque cas un nombre entier.

15. Un procédé selon l'une quelconque des revendications 1 à 14, caractérisé en ce que la précipitation homogène est mise en oeuvre en présence d'urée ou de formamide.

16. Un procédé selon la revendication 15, caractérisé en ce que la température de réaction est de l'ordre de 90°C à 100°C.

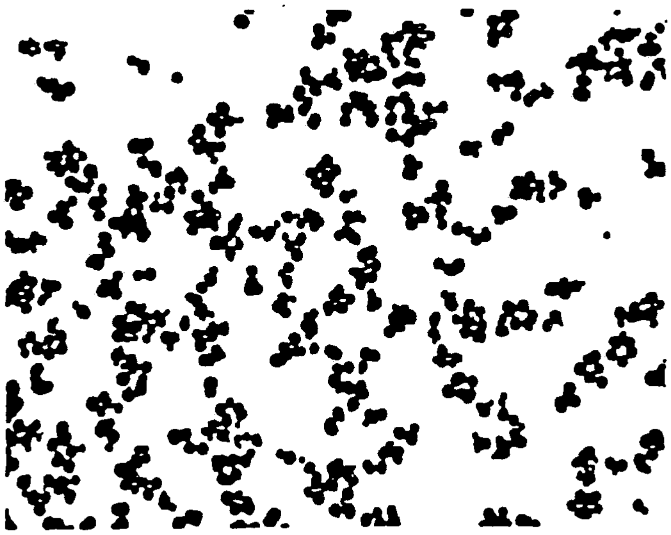

FIGURE 1

1 μm

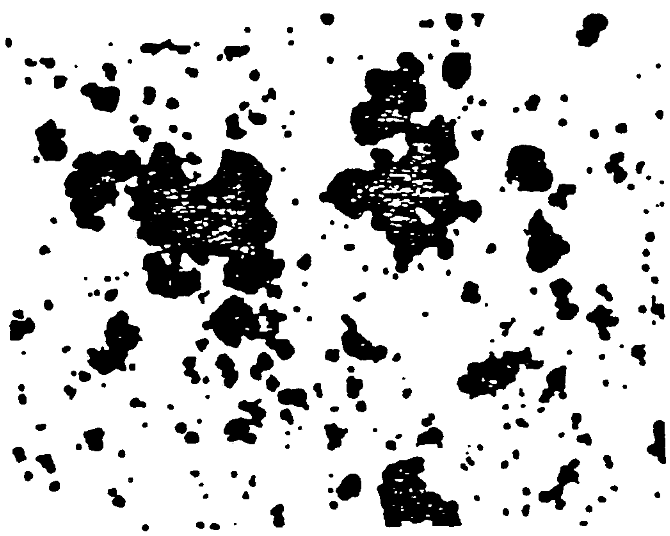

FIGURE 2

1 μm

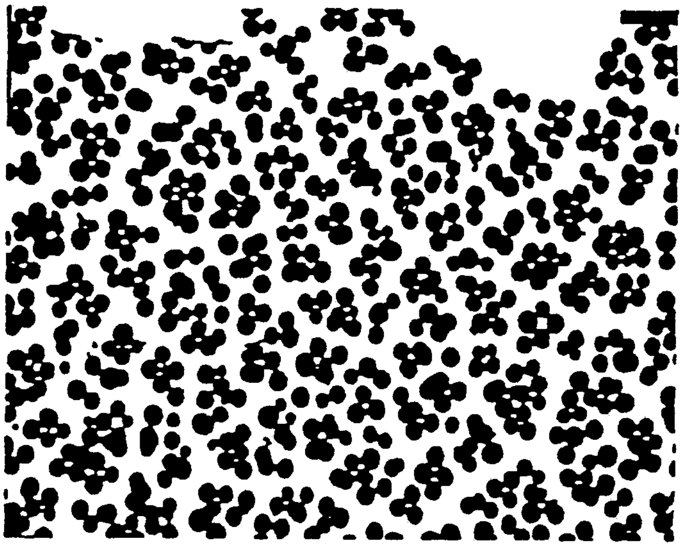

FIGURE 3

1 μm

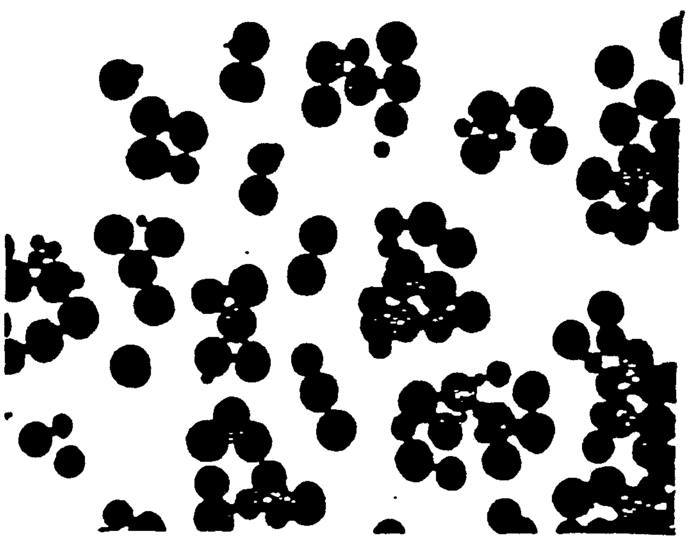

FIGURE 4

1 μm

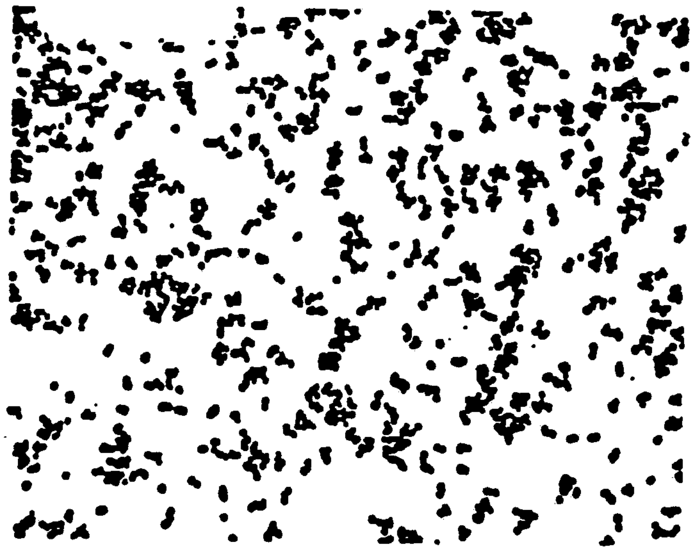

FIGURE 5

1 μm